# EUROPEAN PATENT APPLICATION

(11) **EP 1 069 401 A1**
(43) Date of publication of application: **17.01.2001**
(21) Application number: 99202293.9
(22) Date of filing: 13.07.1999
(51) Int. Cl.: G01B 11/06

(54) **Optical film thickness measuring device**

(71) Applicant: ODME International B.V., 5503 LP Veldhoven (NL)
(72) Inventor: Hoffmann, Erich, 82335 Berg (DE); Krobok, Martin-Paul, 86551 Aichach (DE)
(74) Representative: Veldman-Dijkers, Cornelia G.C., Ir.

(57) **Abstract**

Optical thickness measuring device comprising several light sources (2a-2n), being each one's light individually transmitted to the sample (31) by means of separated illumination optic fibers (26a-26n). Light reflected at the sample is picked up by a second set of optic fibers (27a-27n) in an Y arrangement with illumination fibers, and addressed (24) to spectrometer unit (23). Light sources or transmitting fibers are sequentially switched so that signal from a single sample point reaches the detector at a time. Sample is rotated by a support (29), and measuring points are distributed at different radii (Ra-Rn). Use of device for control of coating of digital video discs (DVD).

## Description

The invention relates to an optical measuring device comprising at least one light emitting element and at least one light detecting element.

Such a device is known to be used for optical measurements whereby light is emitted from the light emitting elements to a substrate after which the light reflected from the substrate is detected by the light detecting element. Based on the light detected by the light detecting element information is obtained about the substrate. This information can for example relate to the thickness of a transparent layer on the substrate.

Nowadays two different devices are known.

A first device comprises only one light emitting element and also only one light detecting element. To conduct measurements at the whole surface of a substrate, the substrate and the device need to be moved with respect to each other. This has the disadvantage that displacement devices are needed as well as a control device to control the displacement devices. Due to the necessary movements between the device and the substrate, the time to conduct the measurements is relatively long.

By another known device several light emitting elements as well as several light detecting elements are provided whereby each light emitting element cooperates with another light detecting element. This device can be considered as a number of single optical measuring devices working in parallel. Such a device has the disadvantage that due to the several light detecting elements the device is relatively expensive and relatively large. Furthermore, for each light detecting element a separate electronic module is needed to convert the information obtained from the light detecting element.

It is an object of the invention to provide an optical measuring device whereby the disadvantages of the known devices have been overcome.

This object has been achieved by the optical measuring device according to the invention in that the device comprises several light emitting elements, whereby the light emitted by each element is detected by the one light detecting element.

Due to the several light emitting elements several positions on the substrate can be illuminated without the need for relatively movements between the substrate and the device. Since only one light detecting element is needed the device can be relatively small and will be less expensive than the known devices.

An embodiment of the optical measuring device according to the invention is characterized in that the light emitting elements are controlled to successively emit light.

Because the light emitting elements successively emit light, the light detecting element will detect the light emitted from the light emitting elements also successively. Thus, quasi-parallel measurements at different positions on the substrate without mechanical movement is possible with the device according to the invention.

Another embodiment of the optical measuring device according to the invention is characterized in that the device comprises several light transmitting elements whereby each light emitting element cooperates with another light transmitting element, whilst each light transmitting element cooperates with the one light detecting element.

The light transmitting elements can for example be light transmitting optical fibres whereby first ends of the fibres are located above different positions of the substrate whilst second ends of the optical fibres are connected to the one and the same light detecting element. It is also possible to use optical fibres in a so called Y-arrangement whereby one end is connected to a light emitting element, one end is located above the substrate and one end is connected to the one light detecting element.

A further embodiment of the optical measuring device according to the invention is characterized in that the light transmitting elements are controlled to successively transmit light.

By controlling the light transmitting elements instead of the light emitting elements, the light emitting elements may emit light continuously.

Yet another embodiment of the optical measuring device according to the invention is characterized in that the device is provided with a support being rotatable about an axis, whereby the light emitting elements emit light to locations at different distances from the axis.

On the support a substrate can be positioned. By the device according to the invention several measurements at different radii can be taken quasi-parallel whilst by rotating the support the whole circumference at each radii the substrate can be measured.

The invention will be explained in more detail hereafter with reference to embodiments of a device according to the invention diagrammatically illustrated in the accompanying figures.

Figure 1 is a schematic view of a device according to the invention.

Figure 2 is a schematic view of another embodiment of a device according to the invention.

Figure 3 is a cross section view of a substrate to be examined by the device according to the invention.

Figure 4 is a time diagram of the light emitting element of the device as shown in figure 2.

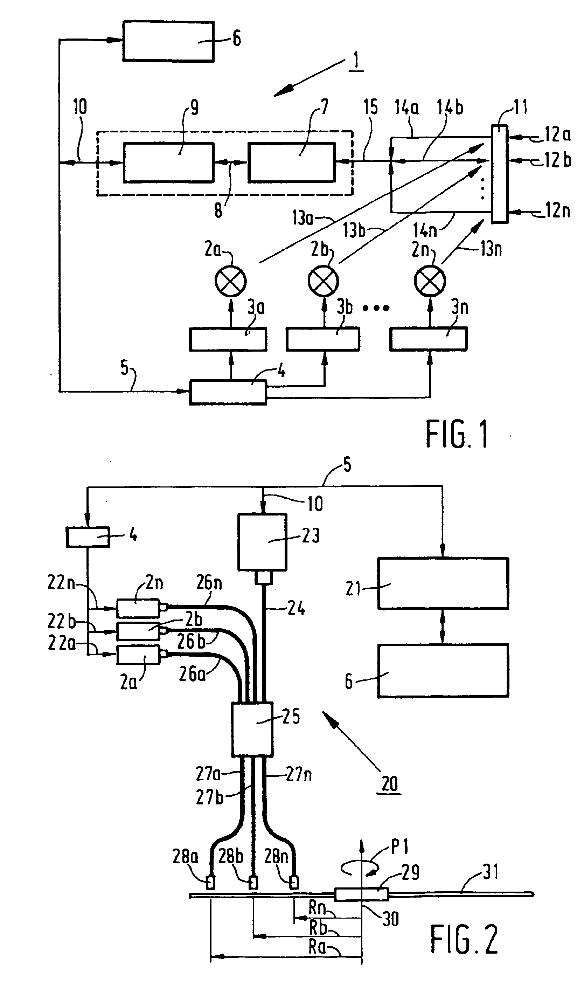

Figure 1 shows a first embodiment of an optical measuring device 1 according to the invention. The device 1 comprises n light emitting elements 2a, 2b .. 2n. The light emitting elements 2a, 2b, .. 2n might be light emitting diodes (LED's). Each light emitting element 2a, 2b .. 2n is connected to individual electronic control units 3a, 3b .. 3n which are all connected to a common illumination control unit 4. The illumination control unit 4 is connected via line 5 to a computer system 6. The optical measuring device 1 is furthermore provided with a light detecting element 7. The light detecting element 7 might be a CCD-line in a spectrometer. The CCD-line is connected by line 8 to an electronic module 9 which is connected via line 9 and line 5 to the computer system 6.

The device 1 according to the invention can be used to measure for example a thickness of a transparent layer on a substrate 11. On the substrate n measuring points 12a, 12b .. 12n are located. The light emitted from the light emitting elements 2a, 2b .. 2n is directed to the measuring positions 12a, 12b, .. 12n respectively as indicated by the light path 13a, 13b .. 13n. The emitted light is reflected on the substrate 11 in the direction of the light detecting element 7 via light paths 14a, 14b .. 14n which merge at a location before or near the light detecting elements 7a in a light path 15. The light paths 13a, 13b, 13n, 14a, 14b, 14n and 15 are only schematically indicated. Especially the paths 14a, 14b .. 14n, 15 will follow a more direct way from the substrate 11 to the light detecting element 7. To obtain information about each measuring point 12a, 12b .. 12n separately, the light emitting elements 2a, 2b .. 2n are controlled by the electronic control units 3a, 3b .. 3n, the illumination control unit 4 and computer 6 so that at each time only one light emitting element 2a, 2b .. 2n is allowed to emit light. The time that each light emitting element is allowed to emit light and the time between the end of emitting light of one element 2a, 2b .. 2n and the beginning of emitting light by the next element 2a, 2b .. 2n can experimentally be determined. The light emitted by one element 2a, 2b .. 2n is reflected by the substrate 11 from the corresponding position 12a, 12 .. 12n to the common light detecting elements 7. By means of the electronic module 9 and the computer system 6 the information obtained by detecting element 7 is converted into the information to be measured at the specific measuring point 12, 12b .. 12n of the substrate 11. This information can for example be the thickness of a transparent layer on the substrate 11. Light emitted from the light emitting elements 2a, 2b .. 2n is partly reflected on the outside of the layer and will partly go through the layer and be reflected by the main substrate 11. Due to interference of the both reflected light beams there will be an intensity modulation which depends on the wave length of the reflected light beams, the refractive index of the layer and the thickness of the layer. By means of spectral analyses the thickness of the layers can be obtained. To measure the thickness of a layer in this manner is commonly known. See for example Optical Properties of Thin Solid Films, Ph.D. O.S. Heavens, Dover Publications Inc.

Figure 2 shows another embodiment of a device 20 according to the invention which is provided with a computer system 6, a data acquisition unit 21 connected thereto, a main illumination control unit 4 connected thereto via line 5 and individual pulsed light emitting elements 2a, 2b .. 2n connected to the unit 4 via lines 22a, 22b .. 22n. The device 20 is furthermore provided with a spectrometer unit 23 which is connected via line 10 and line 5 to the data acquisition unit 21. The spectrometer unit 23 is via a spectrometer fibre 24 connected to a connecting unit 25. Also connected thereto are illumination fibres 26a, 26b .. 26n which are at a side remote from the connecting unit 25 connected to the light emitting elements 2a, 2b .. 2n. Furthermore measuring fibres 27a, 27b, 27c are connected to the connecting unit 25 at the side remote from the illumination fibres 26a, 26b .. 26n and the spectrometer fibre 24. Each measuring fibre 27a, 27b .. 27n comprises an illumination fibre 26a, 26b .. 26n respectively and a spectrometer fibre in an Y-arrangement. At the side remote from the connecting unit 25 the fibres 27a, 27b .. 27n are located with their ends in holders 28a, 28b .. 28n.

The optical measuring device 20 according to the invention is furthermore provided with a support 29 which is rotatable about an axis 30 in the direction indicated by arrow P1. The holders 28a, 28b .. 28n are located at a radius Ra, Rb, Rn respectively of the axis 30. On the supports 29 a substrate 31 to be examined is located. The substrate 31 is for example a DVD-9 disc or a DVD-18 disc.

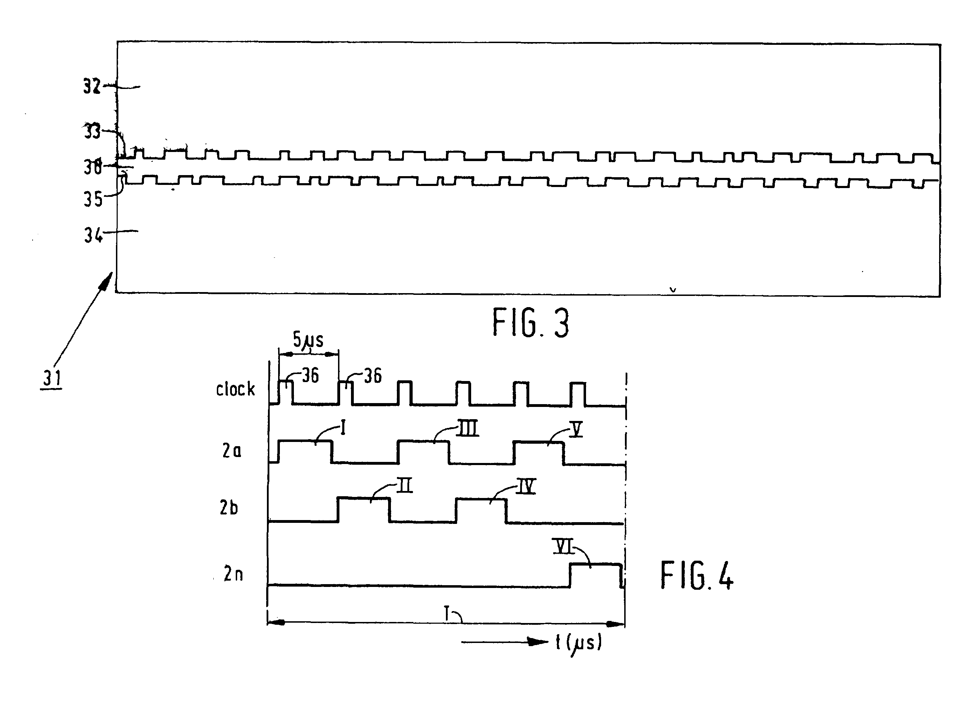

A cross section of a DVD-9 disc is shown in figure 3 whereby the disc 31 comprises a first substrate 32 provided with a first information layer 33, a second substrate 34 provided with a second information layer 35 and a connection layer 36. The connection layer 36 comprises a suitable adhesive. On the information layer 33 a semi-reflective layer comprising gold or silicium is provided. The reflection is about 18-30%. The information layer 35 is provided with a highly-reflective layer for example aluminium. The thickness of the layer 36 is important for a good functioning of the DVD-9 disc. The thickness should be between 40-70 µm.

To measure the thickness of the layer 36 at the respective radii Ra, Rb.. Rn, the disc 31 is rotated by means of the support 29 in the direction indicated by arrow P1. At the same time the light emitting elements 2a, 2b.. 2n are controlled by the unit 4 and computer system 6 so that at each time only one light emitting element 2a, 2b .. 2n is allowed to emit light. Preferably at each circumference at the radii Rb.. Rn measurements need to be taken at the same pitch. Therefore the light emitting element 2a are switched on and off at a faster rate than the light emitting element 2n. Advantageously the frequency by which the light is turned on and off is inversely proportional to the ratio between the radii so that at each circumference measurements are taken at the same pitch.

Figure 4 shows a diagram of one cycle of a time period T in which the light emitting element 2a three times emits light, light emitting element 2b two times emits light whilst light emitting element 2n one time emits light. The emitting of light is controlled by a clock in the unit 4 which gives a pulse 36 each five µs. At the first pulse element 2a is allowed to emit light during time period I. The element 2a further emits light at the third and fifth pulse during time periods III, V. Element 2b starts to emit light at the second and fourth pulse during the periods II and IV. Element 2n, being the third element in this example, start to emit light at the sixth pulse during period VI. The time that each element emits light is for all periods I-VI equal. The ratio between frequency by which light element 2a, 2b.. 2n emits light is in this case 3:2:1. If the ratio between the radii Ra, Rb.. Rn is also 3:2:1 then at each radius measurements are taken at the same pitch. By a DVD-9 disc the relevant area to be measured is located between a radius of 23 mm and 58 mm. If by a DVD-9 disc the light emitting elements emit light at radius of 23, 40 and 58 mm the ratio is about the same as ratio of 1:2:3 of the elements 2n, 2b, 2a.

The light emitted by the light emitting elements 2a, 2b, 2n is transmitted via fibres 26a, 26b .. 26n through fibres 27a, 27b .. 27n from the side of substrate 32 to the disc 31. In the disc 31 the light is partially reflected at the semi-reflective layer of the information layer 33 and partially reflected at the highly-reflective layer of the information layer 35. The reflected light beams interfere and are transmitted through the fibres 27a, 27b .. 27n via spectrometer fibre 24 to the spectrometer unit 23. The information obtained in the spectrometer unit 23 is transmitted to the data acquisition unit and further processed by the computer system 6 to calculate the thickness of the connection layer 36 of the disc 31.

The number n of the light emitting elements can be adapted as desired.

## Claims

1. Optical measuring device comprising at least one light emitting element and at least one light detecting element, characterized in that the device comprises several light emitting elements, whereby the light emitted by each element is detected by the one light detecting element.

2. Optical measuring device according to claim 1, characterized in that the light emitting elements are controlled to successively emit light.

3. Optical measuring device according to claim 1 or 2, characterized in that the device comprises several light transmitting elements whereby each light emitting element cooperates with another light transmitting element, whilst each light transmitting element is connected to the one light detecting element.

4. Optical measuring device according to claim 3, characterized in that the light transmitting elements are controlled to successively transmit light.

5. Optical measuring device according to one of the preceding claims, characterized in that the device is provided with a support being rotatable about an axis, whereby the light emitting elements emit light to locations at different distances from the axis.

6. Optical measuring device according to claim 5 and 3, characterized in that the light transmitting elements are located at the different distances from the axis.

7. Optical measuring device according to claim 5 or 6, characterized in that the light emitting elements are controlled so that the light emitting element located farther from the axis emits light at shorter time intervals than the light emitting element located closer to the axis.

8. Optical measuring device according to claim 7, characterized in that the time that light emitting elements emit light are equal for all light emitting elements.

9. Optical measuring device according to claim 8, characterized in that the ratio between the distances from the axis of the several light emitting elements is about inversely proportional to the ratio between the time intervals of the several light emitting elements.

10. Optical measuring device according to claim 7, characterized in that the light transmitting elements are controlled so that the light transmitting element located farther from the axis transmits light at shorter intervals than the light transmitting element located closer to the axis.

11. Optical measuring device according to claim 10, characterized in that the ratio between the distances from the axis of the several light transmitting elements is about inversely proportional to the ratio between the time intervals.

12. Optical measuring device according to one of the preceding claims, characterized in that each light transmitting element has a configuration like a Y.

13. Optical measuring device according to one of the preceding claims, characterized in that the device further comprises a spectrometer to measure the thickness of a layer of a substrate.

14. Optical measuring device according to claim 13, characterized in that the substrate is a DVD.
